# EUROPÄISCHE PATENTSCHRIFT

(11) **EP 2 817 160 B1**
(45) Veröffentlichungstag und Bekanntmachung des Hinweises auf die Patenterteilung: **07.03.2018**
(21) Anmeldenummer: 12816004.1
(22) Anmeldetag: 22.12.2012
(51) Int. Cl.: B44C 1/00, B44C 3/04, B29C 45/16, B29C 45/14, B29C 45/00

(54) **SPRITZGEGOSSENES DEKORFORMTEIL MIT EFFEKTPIGMENTEN UND HERSTELLUNGSVERFAHREN**
INJECTION MOULDED DECORATIVE ARTICLE COMPRISING EFFECT PIGMENTS AND MANUFACTURING METHOD
ARTICLE DÉCORATIF MOULÉ PAR INJECTION COMPRENANT DES PIGMENTS À EFFET ET PROCÉDÉ DE FABRICATION

(30) Priorität: 22.02.2012 DE 102012003375
(43) Veröffentlichungstag der Anmeldung: 31.12.2014
(73) Patentinhaber: Daimler AG, 70327 Stuttgart (DE)
(72) Erfinder: GAYER, Udo, 71134 Aidlingen (DE); KLEIN, Bernhard, 86633 Neuburg a. d. Donau (DE); LAPINSKA, Malwina, 70771 Echterdingen (DE); STEEB, Holger, 72074 Tübingen (DE)
(74) Vertreter: JENSEN & SON
(86) Internationale Anmeldenummer: PCT/EP2012/005368
(87) Internationale Veröffentlichungsnummer: WO 2013/123960

(56) Entgegenhaltungen:
- EP-A2- 0 249 156
- EP-A2- 1 138 644
- DE-A1- 1 546 799
- DE-A1- 2 633 711
- DE-A1- 4 218 106
- DE-A1- 10 248 270
- DE-A1- 10 253 680
- DE-A1-102010 031 814
- JP-A- 2006 257 368

## Beschreibung

Die Erfindung betrifft ein Dekorformteil, insbesondere für Interieurverkleidungen im Kraftfahrzeug, sowie Verfahren zu dessen Herstellung.

Im Kraftfahrzeugbau werden im Innenraum hochwertige Zierteile und auch dekorativ gestaltete Funktionselemente eingesetzt, um dem Fahrzeug ein exklusives Erscheinungsbild zu verleihen. Häufig wird dazu Edelholz oder Metall verwendet, zunehmend aber auch Kunststoffe, die gezielt auf Funktion und Formgebung abgestimmt werden können. Um eine entsprechend hochwertig anmutende Oberfläche des Kunststoffteils zu schaffen, ist aus dem Stand der Technik bekannt, Kunststoffteile, auch aus dem Möbelbereich und dem Elektronikgerätebereich, mit einer flächendeckenden matten oder glänzenden Oberfläche zu schaffen. Ferner kann ein so genannter Klavierlackeffekt erzeugt werden, indem die Kunststoffteile in zwei aufeinander folgenden Spritzgussprozessen mit zwei verschiedenen Werkstoffkomponenten ausgeformt werden. Auch ist die Herstellung von Kunststoffteilen mit einer dreidimensional wirkenden Oberfläche bekannt, die durch ein Hinterspritzen von relativ dicken Folien erzeugt wird.

Die DE 10 2010 031 814 A1 beschreibt dazu ein Formwerkzeug für Formteile mit einer positiven Oberflächenstruktur, sowie ein Verfahren zur Herstellung des Formwerkzeugs und zur Herstellung des Formteils mit Hilfe des Formwerkzeugs. Zum Schutz der Dekorfläche des Formteils ist dieses mit einem Überzug aus einem Decklack vorgesehen.

Mit dem Clear Coat Molding (CCM) ist ein dazu geeignetes automatisiertes Verfahren bekannt, bei dem hochwertige Bauteile sehr dünn mit einem glasklaren Zweikomponenten PUR-System übergossen werden.

Die DE 102010031814 A1 offenbart ein Dekorformteil aus einem spritzgegossenen Grundkörper mit einer 3D-Oberflächenstruktur an der Sichtfläche und einer auf der Sichtfläche aufgebrachten Deckschicht aus transparentem Kunststoff.

Die DE 4218106 A1 offenbart ein Überzugsmittel, das auf bestimmten Methacryl-Copolymerisaten basiert und Effektpigmente enthalten kann, das insbesondere für Basisschichten in Mehrschichtlackierungen geeignet ist und die Aufgabe löst, eine verbesserte Anlöseresistenz bei der Überlackierung mit Klarlack bereitzustellen.

Die JP 2006 257 368 A beschreibt eine Beschichtungszusammensetzung, mit der eine Effektpigmentschicht mit einem metallischen Erscheinungsbild erzeugt werden kann. Die Zusammensetzung umfasst neben den Grundstoffen für ein Copolymerisat (Oligomer mit zumindest zwei (Meth)acrylat-Gruppen oder ungesättigtes Polyesterharz und ethylenisch ungesättigtes Monomer) ein Rheologieadditiv, das eine Urea-Urethan-Verbindung sein kann, plättchenförmiges Pigment und einen Polymerisierungsinitiator.

Die DE 10253680 A1 beschreibt mehrschichtige Verbundgebilde, die eine thermoplastische Polymerschicht mit flüssigkristallinen Effekt-Pigmenten aufweisen, wobei die Polymerschicht mit den flüssigkristallinen Effekt-Pigmenten eine transparente polymere UV-Schutzschicht aufweist, um die thermische Stabilität und Lichtstabilität des Verbundgebildes zu verbessern.

Aus EP 0 249 156 A2 sind Dekordeckschichten mit transparenten oder transluzenten Lagen bekannt, die plättchenförmige Effektpigmente enthalten. Um einen verbesserten 3D-Effekt der Dekordeckschicht zu erreichen, werden die plättchenförmigen Effektpigmente in der transparenten oder transluzenten Lage mit unterschiedlichen Winkeln in Bezug zu der Oberfläche angeordnet.

Die EP 1 138 644 A2 offenbart einen geformten Körper mit Oberflächeneffekt aus einer Gussmasse, die aus transparentem thermoplastischem Kunststoff, transparenten Füllstoffen und luminiszierenden Pigmenten besteht. Dadurch kann der transparente Körper bei Dunkelheit leuchten.
Ausgehend von diesem Stand der Technik ist es Aufgabe der vorliegenden Erfindung, ein hochwertig anmutendes Zierteil mit einer Oberflächenstruktur mit verbessertem 3D-Effekt unter reduziertem Kosten- und Fertigungsaufwand zu schaffen.

Diese Aufgabe wird durch ein Dekorformteil mit den Merkmalen des Anspruchs 1 gelöst.

Die Aufgabe, derartige Dekorformteile herzustellen wird durch die ein Verfahren mit den Merkmalen der Ansprüche 5 und 6 gelöst.

Weiterbildungen der Dekorformteile und der Verfahren sind in den Unteransprüchen ausgeführt.

In einer ersten Ausführungsform eines erfindungsgemäßen Dekorformteils, das zumindest einen spritzgegossenen Grundkörper aus thermoplastischem Kunststoff mit einer tiefen 3D-Oberflächenstruktur an einer Sichtfläche und eine wenigstens auf der Sichtfläche aufgebrachte Deckschicht aus transparentem Kunststoff umfasst, weist der Grundkörper zumindest eine Schicht mit plättchenförmigen Effektpigmenten an der Sichtfläche auf. Diese plättchenförmigen Effektpigmente liegen in Bezug zu der Oberfläche der Sichtfläche des Grundkörpers überwiegend parallel orientiert vor. Dabei enthält der Kunststoff, der den Grundkörper bildet, die plättchenförmigen Effektpigmente. Damit wird ein Dekorformteil bereit gestellt, das ein neuartiges und hochwertig anmutendes Design hat. Durch die parallel zur Oberfläche der Sichtfläche des Grundkörpers orientierten plättchenförmigen Effektpigmente wird der Glanzeffekt optimiert. "Überwiegend parallel orientiert" meint dabei, dass der überwiegende Anteil der plättchenförmigen Effektpigmente parallel zur Oberfläche angeordnet ist, damit der durch die Effektpigmente erzeugte Effekt möglichst eindrucksvoll und flächig ist und die Struktur dieser als Sichtseite des Dekorformteils vorgesehenen Oberfläche betont.

Der thermoplastische Kunststoff des Grundkörpers kann ein transparenter, transluzenter oder deckender, farbiger oder farbloser Kunststoff sein.
Das Dekorformteil kann eine farbige oder farblose transparente Deckschicht haben und bevorzugt aus
- zumindest einem Thermoplasten, umfassend Celluloseacetat (CA), Methacrylsäure-Butadien-1,3-Styrol-Terpolymer (MABS), Acrylsäure-Styrol-Acrylnitril-Terpolymer (ASA), Polycarbonat (PC), besonders bevorzugt Polymethymethacrylat (PMMA), amorphe TPU, mikrokristalline PA,
- einem 2K-Polyurethan-System, bevorzugt einem 2K-Polyurethan-System mit integriertem Trennmittel, aus Oligoetherpolyolen mit 3 bis 5 OH-Gruppen pro Molekül, bevorzugt mit 3 OH-Gruppen pro Molekül, bevorzugt primären OH-Gruppen, niedermolekularen Kettenverlängerern bevorzugt aus der Gruppe umfassend Ethandiol-1,2; Bis-(1-Hydroxyethyl)-Ether; 2,3-Propandiol, 1,4-Butandiol; 1,6-Hexandiol, 2,2'-Dimethylpropandiol; Isomerengemischen des Trimethyl-1,6-Hexandiol oder 5-Hydroxy-1-hydroxymethyl-1,3,3-trimethylcyclohexan (Isophoron-Diol), sowie oligomeren aliphatischen und/oder cycloaliphatischen Polyisocyanaten mit 2 bis 6 NCO-Gruppen je Molekül, bevorzugt 3 bis 4 NCO-Gruppen pro Molekül,
   oder aus

Oligoesterpolyolen mit 3 bis 5 OH-Gruppen pro Molekül, bevorzugt mit 3 OH-Gruppen pro Molekül, bevorzugt mit primären OH-Gruppen, niedermolekularen Kettenverlängerern bevorzugt aus der Gruppe umfassend Ethandiol-1,2, Bis-(1-Hydroxyethyl)-Ether; 2,3-Propandiol; 1,4-Butandiol; 1,6-Hexandiol; 2,2'-Dimethyl 2,3-Propandiol,lsomerengemischen von Trimethyl-1,6-Hexandiol oder 5-Hydroxy-1-hydroxymethyl-1,3,3-trimethylcyclohexan sowie oligomeren aliphatischen und/oder cycloaliphatischen Polyisocyanaten mit 2 bis 6 NCO-Gruppen je Molekül, oder - einem 2K-Polyurea-System aus oligomeren Polyaminen, bevorzugt aus Oligoetherpolyaminen mit 3 bis 5 NHR'-Gruppen pro Molekül, wobei R' bevorzugt Wasserstoff ist, niedermolekularen aminischen Kettenverlängerern, bevorzugt aliphatischen oder cycloaliphatischen Kettenverlängerern aus der Gruppe umfassend Ethylendiamin, Propylendiamin, Tetramethylendiamin, Hexamethylendiamin, Isomerengemischen des Trimethyl-Hexandiamin-1,6, 5-Amino-1-aminomethyl-1,3,3-trimethylcyclohexan, sowie oligomeren aliphatischen und/oder cycloaliphatischen Polyisocyanaten mit 2 bis 6 NCO-Gruppen je Molekül
bestehen.

Der Grundkörper kann deckend weiß, hellfarbig oder perlmuttartig gefärbt sein und die Deckschicht transparent schwarzgrau sein, so dass vorteilhaft eine eindrucksvolle rauchglasartige Oberflächenanmutung der Sichtfläche des Dekorformteils geschaffen wird.

Das Verfahren zur Herstellung eines erfindungsgemäßen Dekorformteils umfasst die Schritte
- Spritzgießen des Grundkörpers aus einem thermoplastischen Kunststoff, der plättchenförmige Effektpigmente enthält, in einem Formwerkzeug mit einer auswerferseitigen und einer düsenseitigen Werkzeughälfte, dabei Ausbilden einer tiefen 3D-Oberflächenstruktur und in Bezug zu einer vorgesehenen Sichtfläche überwiegend parallellen Orientierung der plättchenförmigen Effektpigmente,
- Öffnen des Formwerkzeugs, wobei der Grundkörper in der auswerferseitigen Werkzeughälfte verbleibt, und Anordnen zu einer zweiten düsenseitigen Werkzeughälfte des Formwerkzeugs, die eine Kavität zur Schaffung der Deckschicht auf dem Grundkörper mit einer für die vorgesehene Oberflächenbeschaffenheit versehenen Oberfläche aufweist. Es folgt das
- Überfluten der Sichtfläche mit der Oberflächenstruktur des Grundkörpers mit einem transparenten Kunststoff zur Bildung einer Deckschicht und Aushärten der Deckschicht,
- Entformen des Dekorformteils.

Für die Hochglanzoberfläche kann etwa vor dem Überfluten das Überführen des Spritzlings z. B. mittels Schiebetisch oder Wendeplatte in eine zweite Kavität mit polierter Hochglanzoberfläche, gegebenenfalls auch mit mattierten oder strukturierten Bereichen, vorgesehen werden.

In diesem Verfahren kann der transparente Kunststoff ein 2K-Polyurethan-System mit einem inneren Trennmittel, oder bevorzugt ein 2K-Polyurea-System sein.

Ferner kann sich auch in diesem Falle an das Entformen des Dekorformteils ein Nachbearbeitungsschritt anschließen, der das Entfernen von Angüssen und zusätzlich oder alternativ bei Verwendung des 2K-Polyurethan-Systems mit innerem Trennmittel das Entfernen der Trennmittelschicht auf der Lackoberfläche anschließen; etwa durch Polieren.

Weiter kann auch in diesem Verfahren ein Endmontageschritt ausgeführt werden, in dem das Dekorformteil in ein übergeordnetes Bauteil montiert wird, etwa in einen Rahmen.

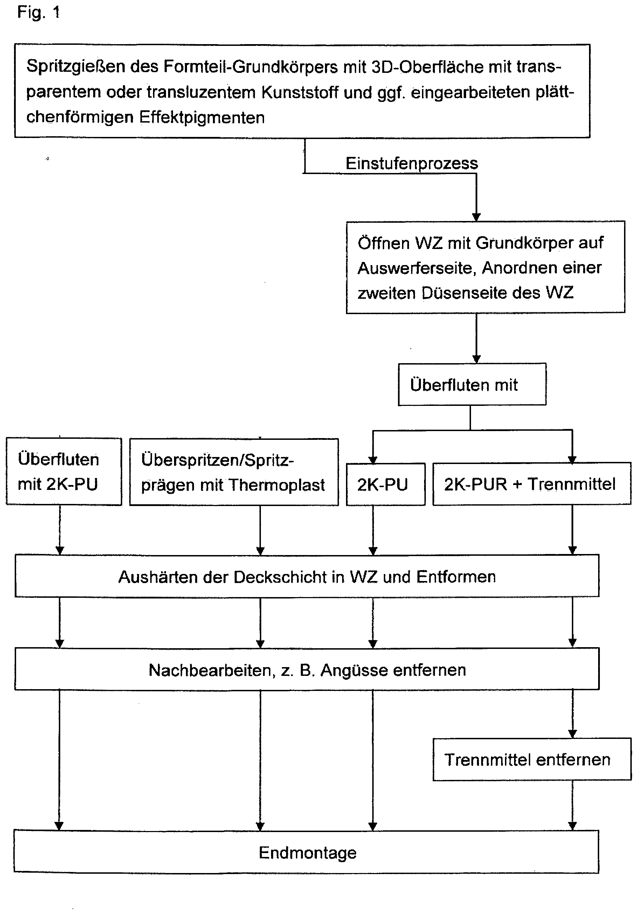

Diese und weitere Vorteile werden durch die nachfolgende Beschreibung unter Bezug auf die begleitende Figur 1 dargelegt. Der Bezug auf die Figur 1 in der Beschreibung dient der Unterstützung der Beschreibung und dem erleichterten Verständnis des Gegenstands.

Die Figur 1 ist lediglich eine schematische Darstellung einer Ausführungsform der Erfindung und zeigt schematisch die Verfahrensschritte zur Herstellung eines erfindungsgemäßen Dekorformteils in einem Mehrstufen- oder Zweistufenprozess.

Die Erfindung bezieht sich auf Dekorformteile, insbesondere Zierteile für Interieurverkleidungen im Kraftfahrzeug, etwa Zierteile für die Instrumententafel, die Mittelkonsole und Türverkleidungen und Verfahren zur Herstellung der Dekorformteile.

Die für Interieurverkleidungen von Kraftfahrzeugen wie Personenkraftwagen vorgesehenen Zierteile, die den gehobenen Anspruch an die Interieurgestaltung erfüllen sollen, sind hierin aus polymeren Werkstoffen, bevorzugt synthetischen polymeren Werkstoffen gefertigt und weisen eine hochglänzende freigeformte Oberfläche und einen mehrschichtigen Aufbau auf. Der Grundkörper, der als unterste Bauteilschicht sowohl die thermischen, mechanischen als auch sicherheitsrelevanten Funktionen übernimmt, kann aus einem lichtundurchlässigen oder auch einem transparenten oder transluzenten Kunststoff beschaffen sein und ist mit einer stark strukturierten, am Strak des finalen Bauteils orientierten Oberfläche versehen.

Unter "Strak" eines Fahrzeuges wird im Automobilbau die geometrische Darstellung aller kundensichtbaren Oberflächen im Interieur und Exterieur unter Berücksichtigung aller technischen und formalästhetischen Ansprüche verstanden. Der Strak ist also das Verbindungsglied zwischen Design und Konstruktion. Im Strak werden die designten Oberflächen in der gewünschten Qualität reproduziert und Lichteffekte (Reflexionen, "Highlights") auf den Flächen optimiert. Weiter werden beim Strak Konstruktionsanforderungen umgesetzt, etwa dass die Flächen aus einem Formwerkzeug entformbar sein müssen und Werkzeugtrennlinien möglichst nicht auf der Sichtfläche liegen.

Die Struktur dieser als Sichtseite des Dekorformteils vorgesehenen Oberfläche wird entweder durch orientiert in den Grundkörper eingebrachte plättchenförmige Effektpigmente und/oder eine Zwischenschicht aus polymeren Materialien mit möglichst parallel zur Bauteiloberfläche ausgerichteten, resp. orientierten, plättchenförmigen Effektpigmenten besonders hervorgehoben. Ferner verleiht eine glasklare oder transparent eingefärbte Deckschicht aus einem Polymerwerkstoff, die mit einer Schichtdicke von 0,15 bis 3 mm aufgebracht sein kann, dem Verbund die gewünschten Oberflächeneigenschaften bezüglich Kratzunempfindlichkeit und Medienbeständigkeit und dient insbesondere durch ihre lichtbrechenden Eigenschaften dazu, die Oberflächenstruktur der darunterliegenden mit Effektpigmenten versehenen Schicht zu verstärken.

Derartige Zierteile mit werkzeuggeprägter Oberfläche können beispielsweise mittels 2K-Thermoplast-Technik hergestellt werden. Die transparente Deckschicht kann durch Überspritzen oder Spritzprägen mit Celluloseacetat (CA), Methacrylsäure-Butadien-1,3-Styrol-Terpolymer (MABS), Acrylsäure-Styrol-Acrylnitril-Terpolymer (ASA), Polycarbonat (PC), darunter insbesondere Polymethymethacrylat (PMMA) erzeugt werden.

Alternativ dazu kann zur Herstellung der Zierteile mit werkzeuggeprägter Oberfläche ein praktisch "druckloser", reaktiver 2K-Überflutungsprozess mit Kunststoffen der Isocyanatchemie eingesetzt werden, wobei darauf zu achten ist, dass die Temperatur der einströmenden Reaktionsmischung zur Bildung der Deckschicht zwischen 50 und 90 °C liegt, um die filigranen Kanten der Thermoplastoberfläche des Grundkörpers nicht zu verletzen, bzw. anzuschmelzen.

In dieser Variante kann zur Bildung der Deckschicht vorgesehen sein, den Grundkörper an seiner strukturierten, die Sichtseite bindenden Oberfläche mit glasklaren oder hochtransparent gefärbten Reaktionsgemischen zu überfluten, die aus
- Oligoetherpolyolen, mit 3 bis 5 OH-Gruppen pro Molekül, bevorzugt mit 3 OH-Gruppen pro Molekül, bevorzugt primären OH-Gruppen,
- niedermolekularen Kettenverlängerern, wie beispielsweise Ethandiol-1,2; Bis (1-Hydroxyethyl)-Ether; 2,3-Propandiol; 1,4-Butandiol; 1,6-Hexandiol; 2,2'-Dimethylpropandiol; Isomerengemischen des Trimethyl-1,6-Hexandiol oder Isophoron-Diol (5-Hydroxy-1-hydroxymethyl-1,3,3-trimethylcyclohexan), sowie
- oligomeren aliphatischen und/oder cycloaliphatischen Polyisocyanaten mit 2 bis 6 NCO-Gruppen je Molekül, bevorzugt 3 bis 4 NCO-Gruppen pro Molekül bestehen.

Ferner ist das Überfluten mit glasklaren oder hochtransparent gefärbten Reaktionsgemischen aus
- Oligoesterpolyolen, mit 3 bis 5 OH-Gruppen pro Molekül, bevorzugt mit 3 OH-Gruppen pro Molekül, bevorzugt primären OH-Gruppen,
- niedermolekularen Kettenverlängerern, wie beispielsweise Ethandiol-1,2; Bis (1-Hydroxy-ethyl)-Ether; 2,3-Propandiol; 1,4-Butandiol; 1,6-Hexandiol; 2,2'-Dimethyl 2,3-Propandiol; Isomerengemischen des Trimethyl-1,6-Hexandiol oder Isophoron-Diol (5-Hydroxy-1-hydroxymethyl-1,3,3-trimethylcyclohexan) sowie
- oligomeren aliphatischen und/oder cycloaliphatischen Polyisocyanaten mit 2 bis 6 NCO-Gruppen je Molekül
möglich.

Eine weitere Möglichkeit besteht in dem Überfluten mit glasklaren oder hochtransparent gefärbten Reaktionsgemischen aus
- oligomeren Polyaminen; hierbei sind Oligoetherpolyamine, mit 3 bis 5 NHR'-Gruppen pro Molekül, wobei R' bevorzugt ebenfalls ein Wasserstoffatom darstellt, besonders geeignet, oder aus
- niedermolekularen aminischen Kettenverlängerern, wie beispielsweise Ethylendiamin, Propylendiamin, Tetramethylendiamin" Hexamethylendiamin, Isomerengemischen des Trimethyl-Hexandiamin-1,6; Isophoron-Diamin (5-Amino-1-aminomethyl-1,3,3-trimethylcyclohexan) sowie

oligomeren aliphatischen und/oder cycloaliphatischen Polyisocyanaten mit 2 bis 6 NCO-Gruppen je Molekül.

Die erfindungsgemäßen Form- bzw. Zierteile mit werkzeuggeprägter Oberfläche können ferner mittels eines mehrstufig erzeugten dreischichtigen Aufbaus erzeugt werden. Dazu wird der Grundkörper aus einem bekannten wärmeformbeständigen Kunststoff spritzgegossen und in einem weiteren Schritt mit einem Effektlack derart beschichtet, dass sich die plättchenförmigen Pigmente des Effektlackes, z. B. Metallic-Pigmente und/oder der Perlglanzpigmente, der besonderen Struktur der Kunststoffoberfläche anpassen, so dass der Flip-Flop-Effekt der Effektpigmente bei unterschiedlichen Beleuchtungswinkeln die Tiefe der Struktur besonders hervorhebt.

Der mit dem Effektlack an der strukturierten Sichtoberfläche überzogene Grundkörper wird in einem weiteren Schritt mit einer transparenten polymeren Deckschicht derart überzogen, dass einerseits eine glänzende Oberfläche entsteht, die andererseits durch ihre lichtbrechenden Eigenschaften die Oberflächenstruktur des Grundkörpers noch einmal verstärkt, und damit einen verbesserten 3D- bzw. Tiefeneffekt erzeugt. Die Deckschicht kann wie in der Variante mit der im Spritzgießprozess erzeugten Effektpigmentschicht aus einem hochtransparenten kratzfesten Thermoplast, wie CA, MABS, ASA, PC, insbesondere PMMA ebenfalls durch Spritzgießen oder Spritzprägen erzeugt werden.

Alternativ dazu kann die transparente Deckschicht mittels RIM-Technik aus Reaktionsprodukten von oligomeren Polyaminen hergestellt werden. Besonders geeignet sind Oligoetherpolyamine mit 3 bis 5 NHR'-Gruppen pro Molekül, wobei R' bevorzugt ebenfalls ein Wasserstoffatom darstellt; oder aber aus
- niedermolekularen aminischen, bevorzugt aliphatischen oder cycloaliphatischen Kettenverlängerern wie beispielsweise Ethylendiamin, Propylendiamin, Tetramethylendiamin, Hexamethylendiamin, Isomerengemischen des Trimethyl-Hexandiamin-1,6; Isophoron-Diamin (5-Amino-1-aminomethyl-1,3,3-trimethylcyclohexan) sowie
oligomeren aliphatischen und/oder cycloaliphatischen Polyisocyanaten mit 2 bis 6 NCO-Gruppen je Molekül in einem Werkzeug mit hochglänzender Oberfläche, bevorzugt ohne Anwendung von Trennmitteln und Katalysatoren, erzeugt werden.

Der Überzug des Grundkörpers mit einer transparenten polymeren Deckschicht kann mittels der RIM-Technik aus Reaktionsprodukten aus Oligoesterpolyolen, mit 3 bis 5 OH-Gruppen pro Molekül, bevorzugt mit 3 OH-Gruppen pro Molekül, bevorzugt primären OH-Gruppen, niedermolekulare Kettenverlängerer, wie beispielsweise Ethandiol-1,2; 2,3-Propandiol; 1,4-Butandiol; 1,6-Hexandiol; 2,2'-Dimethylpropandiol; Isomerengemische des Trimethyl-1,6-Hexandiol sowie oligomere aliphatische und/oder cycloaliphatische Polyisocyanate mit 2 bis 6 NCO-Gruppen je Molekül, bevorzugt mit Anwendung von sogenannten internen oder inneren Trennmitteln in einem Werkzeug mit hochglänzender Oberfläche durchgeführt werden.

Eine Deckschicht aus Reaktionsprodukten aus Oligoetherpolyolen, mit 3 bis 5 OH-Gruppen pro Molekül, bevorzugt mit 3 OH-Gruppen pro Molekül, bevorzugt primären OH-Gruppen, niedermolekularen Kettenverlängerern, wie beispielsweise Ethandiol-1,2; 2,3-Propandiol; 1,4-Butandiol; 1,6-Hexandiol; 2,2'-Dimethylpropandiol; Isomerengemischen des Trimethyl-1,6-Hexandiol, sowie oligomeren aliphatischen und/oder cycloaliphatischen Polyisocyanaten mit 2 bis 6 NCO-Gruppen je Molekül kann ebenfalls mittels einer RIM-Technik in einem Werkzeug mit hochglänzender Oberfläche, bevorzugt mit Anwendung von sogenannten internen Trennmitteln erzeugt werden.

Im Folgenden werden Verfahren und Schichtaufbau beispielhaft zur Erzielung einer rauchglasartigen Optik des Dekorformteils mit werkzeuggeprägter Oberfläche mittels des praktisch "drucklosen", reaktiven 2K-Überflutungsprozesses mit Kunststoffen der Isocyanatchemie beschrieben.

Dabei wird ein deckend weiß, hellfarbig oder perlmuttartig gefärbter Grundkörper mit transparent schwarzgrau getönten Reaktionsgemischen aus
- Oligoetherpolyolen, mit 3 bis 5 OH-Gruppen pro Molekül, bevorzugt mit 3 OH-Gruppen pro Molekül, bevorzugt primären OH-Gruppen, den niedermolekularen Kettenverlängerern sowie den oligomeren aliphatischen und/oder cycloaliphatischen Polyisocyanaten mit 2 bis 6 NCO-Gruppen je Molekül, oder aus
- Oligoesterpolyolen, mit 3 bis 5 OH-Gruppen pro Molekül, bevorzugt mit 3 OH-Gruppen pro Molekül, bevorzugt primären OH-Gruppen, den niedermolekularen Kettenverlängerern, sowie den oligomeren aliphatischen und/oder cycloaliphatischen Polyisocyanaten mit 2 bis 6 NCO-Gruppen je Molekül, oder aus
- oligomeren Polyaminen, bevorzugt Oligoetherpolyamine, mit 3 bis 5 NHR'-Gruppen pro Molekül, wobei R' bevorzugt ebenfalls ein Wasserstoffatom darstellt, den niedermolekularen aminischen Kettenverlängerern, sowie den oligomeren aliphatischen und/oder cycloaliphatischen Polyisocyanaten mit 2 bis 6 NCO-Gruppen je Molekül zum Erzielen der rauchglasartigen Optik überflutet.

Klassische Verfahren zur Herstellung von Zier- bzw. Dekorformteilen umfassen in einem Mehrstufenprozess das Spritzgießen der Trägerschicht/ des Grundkörpers bzw. Hinterspitzen einer Dekorfolie oder eines Echtholzfurniers, dem gegebenenfalls der Beschnitt folgt, woraufhin entweder ein Sprühlackieren mit reaktivem Lacksystem, Trocknen, Polieren (mehrfach oder überspritzen bzw. überfluten) oder ein Überfluten mit lösemittelfreiem 2K-Polyurethan-System in einem entsprechenden Werkzeug (ClearCoat Molding, klassischer mehrstufiger PUR-Prozess) folgt. Beim Überfluten wird nach Trennmittelauftrag auf die sichtseitige Werkzeugoberfläche des Flutwerkzeuges, dem Ablüften, und gegebenenfalls Polieren des Trennmittelfilms in dieser Werkzeughälfte der Grundkörper in die Unterseite des Flutwerkzeuges eingelegt und mit einem lösemittelfreien 2K-Polyurethan-System überflutet. Nach Aushärten der Deckschicht im Werkzeug, wobei die werkzeuggeprägte Oberfläche entsteht, kann das Dekorformteil entformt und die auf der Lackoberfläche vorliegende Trennmittelschicht beispielsweise durch Polieren entfernt werden. Es können sich Beschnitt des Dekorformteils und gegebenenfalls Endmontage mit einem Rahmen anschließen.

In einem erfindungsgemäßen Verfahren wird in der einstufigen Prozessvariante, wie in der Figur 1 zu sehen, zunächst der Dekorformteil-Grundkörper mit an den Strak des Dekorformteils angelehnter tiefer dreidimensional geprägter Oberfläche mit einem transparenten oder transluzenten Kunststoff spritzgegossen, in den Einstufenprozessen, die in der Figur 1 dem rechten Ast folgen, mit plättchenförmigen, reflektierenden Effektpigmenten und gegebenenfalls weiteren transparenten Farbpigmenten zumindest in einer Schicht an der strukturierten Oberfläche.

Bei den Einstufenprozessen, die dem rechten Ast in der Figur 1 folgen, wird nach erfolgtem Spritzgießen des Grundkörpers mit an den Strak angelehnter tiefer, dreidimensional geprägter Oberfläche mit einem transparenten oder transluzenten Kunststoff mit eingearbeiteten plättchenförmigen, reflektierenden Effektpigmenten und gegebenenfalls weiteren transparenten Farbpigmenten das Spritzgusswerkzeug geöffnet, wobei der Grundkörper in der auswerferseitigen Werkzeughälfte verbleibt. Mittels Schiebetisch, Drehteller oder Wendeplatte oder ähnlichem wird die auswerferseitige Werkzeughälfte mit dem Grundkörper an einer zweiten düsenseitigen Werkzeughälfte des Werkzeugs angeordnet, die eine Kavität zur Schaffung der Deckschicht auf der strukturierten Sichtoberfläche bereitstellt und mit einer polierten Hochglanzoberfläche, sowie gegebenenfalls auch mattierten oder strukturierten Bereichen versehen ist. Nach Schließen der Werkzeughälften wird der Grundkörper nun entweder mit einem verhältnismäßig dicken, lösemittelfreiem 2K-Polyurea-System oder mit einem lösemittelfreiem 2K-Polyurethan-System mit innerem Trennmittel überflutet, so dass nach Aushärten des Lackes im Werkzeug die werkzeuggeprägte Oberfläche des Dekorformteils mit besonderer Betonung der Oberflächenstruktur erhalten wird. Nach dem Entformen des Dekorformteils können wie in den mehrstufigen Prozessen die Dekorformteile nachbearbeitet und beispielsweise Angüsse entfernt werden und zur Endmontage überführt werden.

Bei der Verfahrensvariante, die zum Überfluten das 2K-Polaurethan-System mit innerem Trennmittel nutzt, ist nach dem Entformen gegebenenfalls das Entfernen der Trennmittelschicht auf der Lackoberfläche etwa durch Polieren als weitere Nachbearbeitung erforderlich.

Im Stand der Technik sind die in der einstufigen Prozessführung beschriebenen kombinierten Reaktions- und Beschichtungsverfahren, beispielsweise das SkinForm®-Verfahren von Krauss-Maffei, München, oder das DirectSkinning (Bayer, Leverkusen) bekannt. Dabei erfolgt das Spritzgießen und Beschichten des Bauteils zur Schaffung eines Kunststoffbauteils mit lederähnlicher Optik in einem Werkzeug, in dem das spritzgegossene Trägerbauteil auf dem schließseitigen Werkzeugkern verbleibt und nach Überführung in eine zweite Kavität, an der ein PUR-Mischkopf angebracht ist, beschichtet wird. Weitere Verfahren und Werkzeuge zum "Lackieren im geschlossenen Werkzeug" sind ColorForm von Krauss-Maffei oder Directcoating von Bayer. Auch das als puroskin™ von Rühl, Friedrichsdorf, Deutschland, bekannt Verfahren kombiniert die Spritzgieß- und Reaktionstechnik in einem Prozess. Ferner ist von ENGEL (Schwertberg, Österreich) neben einem x-melt genannten Verfahren, das ein Hochgeschwindigkeits-Spritzgießen ist, wobei die Kompressibilität der Kunststoffschmelze als Energiespeicher genutzt wird, mit dem clearmelt Verfahren das Überfluten eines thermoplastischen Trägerbauteils mit transparentem Polyurethan mittels Schiebetischtechnologie bekannt.

Allerdings werden bislang in den bekannten kombinierten Reaktions- und Beschichtungsverfahren ausschließlich PUR-Systeme (Polyol und Polyisocyanat) zur Herstellung der Beschichtung eingesetzt.

Hierbei sind aufgrund der geringen Reaktivität relativ große Katalysatormengen erforderlich, die nachteilig das Alterungsverhalten beeinträchtigen. Die OH-Gruppen haben eine ähnliche Reaktivität wie Wasser, so dass es ohne Trennmittel zu Harnstoffanbackungen an den Werkzeugoberflächen kommt.

Die in einer erfindungsgemäßen Ausführungsform eingesetzten Polyurea (PU)-Systeme (Polyisocyanat und Polyamin) benötigen aufgrund ihrer hohen Reaktivität vorteilhaft keine Katalysatoren, so dass sie ein besseres Alterungsverhalten aufzeigen. Durch die hohe Reaktivität werden ferner keine ständig erneuerten Trennmittel erforderlich.

## Patentansprüche

1. Dekorformteil, das zumindest einen spritzgegossenen Grundkörper aus thermoplastischem Kunststoff mit einer tiefen 3D-Oberflächenstruktur an einer Sichtfläche und eine wenigstens auf der Sichtfläche aufgebrachte Deckschicht aus transparentem Kunststoff umfasst,
**dadurch gekennzeichnet, dass**
der Grundkörper zumindest eine Schicht, die plättchenförmigen Effektpigmente enthält, an der Sichtfläche aufweist, wobei die plättchenförmigen Effektpigmente in Bezug zu der Oberfläche der Sichtfläche des Grundkörpers überwiegend parallel orientiert vorliegen,
wobei der Kunststoff, der den Grundkörper bildet, die plättchenförmigen Effektpigmente enthält.

2. Dekorformteil nach Anspruch 1,
**dadurch gekennzeichnet, dass**
der thermoplastische Kunststoff des Grundkörpers ein transparenter, transluzenter oder deckender, farbiger oder farbloser Kunststoff ist.

3. Dekorformteil nach Anspruch 1 oder 2,
**dadurch gekennzeichnet, dass**
die Deckschicht farbig oder farblos transparent ist und bevorzugt aus
- zumindest einem Thermoplasten, umfassend Celluloseacetat (CA), Methacrylsäure-Butadien-1,3-Styrol-Terpolymer (MABS), Acrylsäure-Styrol-Acrylnitril-Terpolymer (ASA), Polycarbonat (PC), besonders bevorzugt Polymethymethacrylat (PMMA), amorphe TPU, mikrokristalline PA,
- einem 2K-Polyurethan-System, bevorzugt einem 2K-Polyurethan-System mit integriertem Trennmittel, aus Oligoetherpolyolen mit 3 bis 5 OH-Gruppen pro Molekül, bevorzugt mit 3 OH-Gruppen pro Molekül, bevorzugt primären OH-Gruppen, niedermolekularen Kettenverlängerern bevorzugt aus der Gruppe umfassend Ethandiol-1,2; Bis-(1-Hydroxyethyl)-Ether; 2,3-Propandiol, 1,4-Butandiol; 1,6-Hexandiol, 2,2'-Dimethylpropandiol; Isomerengemischen des Trimethyl -1,6-Hexandiol oder 5-Hydroxy-1-hydroxymethyl-1,3,3-trimethylcyclohexan (Isophoron-Diol), sowie oligomeren aliphatischen und/oder cycloaliphatischen Polyisocyanaten mit 2 bis 6 NCO-Gruppen je Molekül, bevorzugt 3 bis 4 NCO-Gruppen pro Molekül, oder aus
Oligoesterpolyolen mit 3 bis 5 OH-Gruppen pro Molekül, bevorzugt mit 3 OH-Gruppen pro Molekül, bevorzugt mit primären OH-Gruppen, niedermolekularen Kettenverlängerern bevorzugt aus der Gruppe umfassend Ethandiol-1,2, Bis-(1-Hydroxyethyl)-Ether; 2,3-Propandiol; 1,4-Butandiol; 1,6-Hexandiol; 2,2'-Dimethyl 2,3-Propandiol,Isomerengemischen von Trimethyl-1,6-Hexandiol oder 5-Hydroxy-1-hydroxymethyl-1,3,3-trimethylcyclohexan sowie oligomeren aliphatischen und/oder cycloaliphatischen Polyisocyanaten mit 2 bis 6 NCO-Gruppen je Molekül, oder - einem 2K-Polyurea-System aus oligomeren Polyaminen, bevorzugt aus Oligoetherpolyaminen mit 3 bis 5 NHR'-Gruppen pro Molekül, wobei R' bevorzugt Wasserstoff ist, niedermolekularen aminischen Kettenverlängerern, bevorzugt aliphatischen oder cycloaliphatischen Kettenverlängerern aus der Gruppe umfassend Ethylendiamin, Propylendiamin, Tetramethylendiamin, Hexamethylendiamin, Isomerengemischen des Trimethyl-Hexandiamin-1,6, 5-Amino-1-aminomethyl-1,3,3-trimethylcyclohexan, sowie oligomeren aliphatischen und/oder cycloaliphatischen Polyisocyanaten mit 2 bis 6 NCO-Gruppen je Molekül besteht.

4. Dekorformteil nach zumindest einem der Ansprüche 1 bis 3,
**dadurch gekennzeichnet, dass**
der Grundkörper deckend weiß, hellfarbig oder perlmuttartig gefärbt ist und die Deckschicht transparent schwarzgrau ist, wobei eine rauchglasartige Oberflächenanmutung der Sichtfläche des Dekorformteils bereitgestellt wird.

5. Verfahren zur Herstellung eines Dekorformteils nach zumindest einem der Ansprüche 1 bis 4,
umfassend die Schritte
- Spritzgießen des Grundkörpers aus einem thermoplastischen Kunststoff, der plättchenförmige Effektpigmente enthält, in einem Formwerkzeug mit einer auswerferseitigen und einer düsenseitigen Werkzeughälfte, dabei Ausbilden einer tiefen 3D-Oberflächenstruktur und in Bezug zu einer vorgesehenen Sichtfläche überwiegend parallelen Orientierung der plättchenförmigen Effektpigmente,
- Öffnen des Formwerkzeugs, wobei der Grundkörper in der auswerferseitigen Werkzeughälfte verbleibt, und Anordnen zu einer zweiten düsenseitigen Werkzeughälfte des Formwerkzeugs, die eine Kavität zur Schaffung der Deckschicht auf dem Grundkörper mit einer für die vorgesehene Oberflächenbeschaffenheit versehenen Oberfläche aufweist,
- Überfluten der Sichtfläche mit der Oberflächenstruktur des Grundkörpers mit einem transparenten Kunststoffs zur Bildung einer Deckschicht und Aushärten der Deckschicht,
- Entformen des Dekorformteils.

6. Verfahren nach Anspruch 5,
wobei der transparente Kunststoff ein 2K-Polyurea-System, oder ein 2K-Polyurethan-System mit einem inneren Trennmittel ist, und wobei sich an das Entformen des Dekorformteils bevorzugt
- ein Nachbearbeitungsschritt umfassend das Entfernen von Angüssen und/oder
- bei Verwendung des 2K-Polyurethan-Systems mit innerem Trennmittel ein Nachbearbeitungsschritt umfassend das Entfernen einer Trennmittelschicht auf der Lackoberfläche bevorzugt durch Polieren,
- ein Endmontageschritt des Dekorformteils, bevorzugt in einem Rahmen anschließt.

## Claims

1. Decorative moulding comprising at least one injection-moulded base body of a thermoplastic plastic material with a deep 3D texture on a visual surface and at least one surface layer of transparent plastic applied to the visual surface,
**characterised in that**
the base body has on its visual surface at least one layer containing platelet-shaped effect pigments, wherein the platelet-shaped effect pigments are largely oriented parallel relative to the surface of the visual surface of the base body,
wherein the plastic material forming the base body contains the platelet-shaped effect pigments.

2. Decorative moulding according to claim 1,
**characterised in that**
the thermoplastic plastic material of the base body is a transparent, translucent or opaque coloured or colourless plastic material.

3. Decorative moulding according to claim 1 or 2,
**characterised in that**
the surface layer is coloured- or colourless-transparent and preferably consists of
- at least one thermoplastic material comprising cellulose acetate (CA), methacrylic acid butadiene-1,3-styrene terpolymer (MABS), acrylic acid styrene acrylonitrile terpolymer (ASA), polycarbonate (PC), particularly preferably polymethacrylate (PMMA), amorphous TPU, microcrystalline PA,
- a 2K polyurethane system, preferably a 2K polyurethane system with integrated release agent, oligoether polyoles with 3 to 5 OH groups per molecule, preferably with 3 OH groups per molecule, preferably primary OH groups, low-molecular chain extenders, preferably from the group comprising ethane diol-1,2; bis-(hydroxyethyl)-ether; 2,3-propane diol; 1,4-butane diol; 1,6-hexane diol; 2.2'-dimethyl propane diol; isomer mixtures of trimethyl-1,6-hexane diol or 5-hydroxy-1-hydroxymethyl-1,3,3-trimethyl cyclohexane (isophorone diol), as well as oligomeric aliphatic and/or cycloaliphatic polyisocyanates with 2 to 6 NCO groups per molecule, preferably 3 to 4 NCO groups per molecule, or of oligoester polyols with 3 to 5 OH groups per molecule, preferably with 3 OH groups per molecule, preferably primary OH groups, low-molecular chain extenders, preferably from the group comprising ethane diol-1,2; bis-(hydroxyethyl)-ether; 2,3-propane diol; 1,4-butane diol; 1,6-hexane diol, 2.2'-dimethyl 2,3-propane diol; isomer mixtures of trimethyl-1,6-hexane diol or 5-hydroxy-1-hydroxymethyl-1,3,3-trimethyl cyclohexane as well as oligomeric aliphatic and/or cycloaliphatic polyisocyanates with 2 to 6 NCO groups per molecule, or of
- a 2K polyurea system of oligomeric polyamines, preferably of oligoether polyamines with 3 to 5 NHR' groups per molecule, wherein R' is preferably hydrogen, low-molecular aminic chain extenders, preferably aliphatic and/or cycloaliphatic chain extenders from the group comprising ethylene diamine, propylene diamine, tetramethylene diamine, hexamethylene diamine, isomer mixtures of trimethyl hexane diamine-1,6,5-amino-1-animomethyl-1,3,3-trimethyl cyclohexane as well as oligomeric aliphatic and/or cycloaliphatic polyisocyanates with 2 to 6 NCO groups per molecule.

4. Decorative moulding according to one or more of claims 1 to 3,
**characterised in that**
the base body is coloured opaque white, light-coloured or nacre and the surface layer is transparently greyish-black, providing a smoked glass-like surface impression of the visual surface of the decorative moulding.

5. Method for producing a decorative moulding according to one or more of claims 1 to 4,
comprising the steps of
- the injection moulding of the base body from a thermoplastic plastic material containing platelet-shaped effect pigments in a mould with an ejection-side and a nozzle-side mould half, in this process the formation of a 3D texture and a largely parallel orientation of the platelet-shaped effect pigments relative to a provided visual surface,
- the opening of the mould, the base body remaining in the ejection-side mould half, and the arrangement relative to a second nozzle-side mould half of the mould, which has a cavity for producing the surface layer on the base body with a surface matching the intended surface condition,
- the flooding of the visual surface with the texture of the base body with a transparent plastic material to form a surface layer and the curing of the surface layer,
- the demoulding of the decorative moulding.

6. Method according to claim 5,
wherein the transparent plastic material is a 2K polyurethane system or a 2K polyurethane system with an internal release agent, and wherein the demoulding of the decorative moulding is preferably followed by
- a finishing step comprising the removal of sprue and/or
- when using the 2K polyurethane system with an internal release agent, a finishing step comprising the removal of a release agent layer on the surface, preferably by polishing,
- a final assembly step of the decorative moulding, preferably in a frame.

## Revendications

1. Pièce moulée de décoration qui comprend au moins un corps de base moulé par injection dans une matière synthétique thermoplastique ayant une structure de surface 3 D profonde sur une surface apparente et une couche de recouvrement constituée de matière plastique transparente appliquée au moins sur la surface apparente, **caractérisée en ce que** le corps de base présente au moins une couche qui contient des pigments à effet en forme de plaquettes, sur la surface apparente, les pigments à effet en forme de plaquettes sont orientés principalement parallèlement par rapport à la surface de la face apparente du corps de base, la matière synthétique, qui forme le corps de base, contient les pigments à effet en forme de plaquettes.

2. Pièce moulée de décoration selon la revendication 1, **caractérisé en ce que** la matière synthétique thermoplastique du corps de base est une matière plastique incolore ou colorée, transparente, translucide ou opaque.

3. Pièce moulée de décoration selon la revendication 1 ou la revendication 2, **caractérisé en ce que** la couche de recouvrement est colorée ou transparente incolore et de préférence est constituée d'
- d'au moins un thermoplastique, comprenant de l'acétate de cellulose (CA), de l'acide méthacrylique-butadiène-1,3-styrol-terpolymère (MABS), de l'acrylonitrile styrène acrylate (ASA), du polycarbonate (PC), de préférence encore du polyméthacrylate de méthyle (PMMA), du TPU amorphe, du PA microcristallin,
- d'un système polyuréthane 2K, de préférence un système polyuréthane 2 K ayant un agent de séparation intégré, constitué d'oligoétherpolyole avec 3 à 5 groupes par molécule, de préférence avec 3 groupes OH par molécule, de préférence des groupes primaires OH, des agents d'allongement de chaîne de préférence provenant du groupe comprenant de l'éthandiole-1,2; bis-(1-hydroxyéthyl)-éther ; 2,3-propandiole, 1,4-butandiole ; 1,6-hexandiol, 2,2'-diméthylpropandiole ; des mélanges d'isomères du tri méthyl -1,6- hexandiol ou 5-hydroxy-1-hydroxyméthyl-1,3,3-triméthylcyclohexane (isophoron-diole), ainsi que des polyisocyanates cycloaliphatiques et/ou aliphatiques oligomères avec 2 à 6 groupes NCO par molécule, de préférence 3 à 4 groupes NCO par molécule ou provenant d'oligoétherpolyole avec 3 à 5 groupes OH par molécule, de préférence avec 3 groupes OH par molécule, de préférence avec des groupes OH primaires, des agents d'allongement de chaîne de faible poids moléculaire de préférence provenant du groupe comprenant éthandiol-1,2, bis-(1-hydroxyéthyl)-éther ; 2,3-propandiol ; 1,4-butandiol ; 1,6-hexandiol ; 2,2'-diméthyl 2,3-propandiol, mélanges isomères de triméthyl-1,6-hexandiol ou 5-hydroxy-1-hydroxyméthyl-1,3,3-triméthylcyclohexane et polyisocyanates aliphatiques oligomères et/ou cycloaliphatiques avec 2 à 6 groupes NCO par molécule, ou - un système polyurée 2K à partir de polyamines d'oligomères, de préférence à partir d'oligoetherpolyamine avec 3 à 5 groupes NHR par molécule, R' étant de préférence de l'hydrogène, des agents d'allongement de chaîne aminiques de faible poids moléculaire, de préférence des agents d'allongement de chaîne aliphatiques ou cycloaliphatiques provenant du groupe comprenant de l'éthylènediamine, du propylènediamine, du tétraméthylènediamine de l'hexaméthylènediamine, des mélanges isomères du trimethyl-hexandiamin-1,6, 5- amino-1-aminomethyl-1,3,3-trimethylcyclohexan, et des polyisocyanates aliphatiques et/ou cycloaliphatiques avec 2 à 6 groupes NCO par molécule.

4. Pièce moulé de décoration selon l'une quelconque des revendications 1 à 3, **caractérisée en ce que** le corps de base est coloré de blanc opaque, nacré, de couleur clair et la couche de recouvrement est gris noir transparent, produisant une impression de verre fumé de la surface apparente de la pièce moulée de décoration.

5. Procédé de fabrication d'une pièce moulée de décoration selon au moins l'une quelconque des revendications 1 à 4, comprenant les étapes consistant à
- mouler par pulvérisation le corps de base en matière synthétique thermoplastique qui contient des pigments à effet en forme de plaquettes, dans un moule ayant des moitiés côté éjecteur et côté buse, formant ainsi une structure de surface 3D profonde et par rapport à une surface apparente prévue une orientation principalement parallèle des pigments à effet en forme de plaquettes,
- ouvrir l'outil de moulage, le cops de base demeurant dans la moitié de l'outil côté éjecteur, et disposer dans une seconde moitié d'outil côté buse de l'outil de moulage qui présente une cavité destinée à créer la couche de recouvrement sur le corps de base avec une surface ayant une la finition prévue,
- inonder la surface apparence ayant la structure de surface du corps de base à l'aide d'une matière plastique transparente pour former une couche de recouvrement et durcir la couche de recouvrement,
- démouler la pièce moulée de décoration.

6. Procédé selon la revendication 5, La matière plastique transparente étant un système polyurée 2K ou un système polyuréthane 2K ayant un agent de séparation interne et subséquent au démoulage de la pièce moulée de décoration
- une étape d'usinage comprenant le retrait des masselottes et/ou
- lors de l'utilisation du système polyuréthane 2K avec un agent de séparation interne une étape d'usinage comprenant le retrait d'une couche d'agent de séparation sur la surface peinte de préférence par polissage,
- une étape de montage final de la pièce moulée de décoration, de préférence dans un cadre.
